# EUROPÄISCHE PATENTSCHRIFT

(11) **EP 1 428 435 B1**
(45) Veröffentlichungstag und Bekanntmachung des Hinweises auf die Patenterteilung: **28.12.2005**
(21) Anmeldenummer: 03024737.3
(22) Anmeldetag: 29.10.2003
(51) Int. Cl.: A21C 9/04

(54) **Vorrichtung zum Aufbringen eines Produkts auf eine Unterlage**
Apparatus for applying a product onto a substrate
Dispositif pour l'application d'un produit sur un support

(30) Priorität: 13.12.2002 DE 10258243
(43) Veröffentlichungstag der Anmeldung: 16.06.2004
(73) Patentinhaber: Freiberger Lebensmittel GmbH & Co. Produktions- und Vertriebs KG, 13439 Berlin (DE)
(72) Erfinder: Dolski, Eberhard, 14476 Seeburg (DE)
(74) Vertreter: Dimmerling, Heinz

(56) Entgegenhaltungen:
- EP-A- 0 293 671
- DE-U- 20 202 001
- GB-A- 2 269 810
- US-A- 5 171 367

## Beschreibung

Die Erfindung betrifft eine Vorrichtung nach dem Oberbegriff des Anspruchs 1, zum Aufbringen eines Produkts auf eine Unterlage, mit einem Behälter für das Produkt, an dessen Boden sich Öffnungen zur Abgabe des Produktes befinden, welche mittels eines Schiebers verschließbar sind.

Eine derartige Vorrichtung ist beispielsweise aus der US 3,505,963 bekannt. Die bekannte Vorrichtung, welche zum Aufbringen einer Soße auf eine Pizza verwendet wird, weist einen Vorratsbehälter für die Soße auf, an dessen unterem Ende sich rohrförmige Elemente zum Abgeben einer Soße befinden. Im Vorratsbehälter ist ein Kolben angeordnet, mittels welchem die sich im Vorratsbehälter befindliche Soße unter Druck gesetzt werden kann. Durch den Druck wird die Soße durch die Abgabeelemente gepreßt, wodurch sie auf die Pizza gelangt.

Nachteilig bei der bekannten Vorrichtung ist, daß die Abgabe der Soße nicht exakt gestoppt werden kann. Auch wenn der Druck im Vorratsbehälter aufgehoben ist, besteht immer noch die Gefahr, daß Soße aus den Abgabeelementen tropft.

Zur Vermeidung dieses Nachteils ist es aus der US 3,547,052 bekannt, bei einer ähnlichen Vorrichtung zum Beenden der Abgabe der Soße im Vorratsbehälter kurzzeitig einen Unterdruck zu erzeugen. Durch den Unterdruck wird die sich in den rohrförmigen Abgabeelementen befindliche Soße in Richtung Vorratsbehälter gesogen.

Wenngleich durch den Unterdruck auch die Gefahr des Tropfens von Soße aus den Abgabeelementen verringert ist, so läßt sich der Soßenfluß auf die Unterlage dennoch nicht gänzlich stoppen. Hierdurch gelangt Soße auf Bereiche der Unterlage, wie beispielsweise den Rand der Pizzen, wo keine Soße vorhanden sein sollte. Des weiteren läßt sich mittels der bekannten Vorrichtungen die Menge der auf die Unterlage abgegebenen Soße nicht sehr genau einstellen. Darüber hinaus ist die für die Abgabe der Soße auf die Unterlage erforderliche Zeit auch relativ lang.

Insbesondere haben die bekannten Vorrichtungen den Nachteil, daß die Öffnungen verstopfen, wenn sich in dem Produkt feste Teile befinden, welche größer als die Öffnungen sind. Es müssen daher Maßnahmen ergriffen werden, daß sich keine festen Teile in dem Produkt befinden. Ungeachtet dessen besteht auch dann, wenn sich im Produkt keine festen Teile befinden, die Gefahr, daß sich die Öffnungen im Laufe der Zeit zusetzen.

Aus der DE-202 02 001 U ist eine Vorrichtung nach dem Oberbegriff des Anspruchs 1 bekannt.

Weiter ist aus der GB-A-2 269 810 eine Vorrichtung zum Aufbringen eines Produkts auf eine Unterlage bekannt, bei welcher das Produkt mittels eines Behälters, welcher eine mit Öffnungen versehene Bodenplatte hat, auf die Unterlage aufgebracht wird. In dem Behälter befindet sich eine Platte, an welcher Stifte befestigt sind, welche mit den Öffnungen korrespondieren. Durch axiale Verschiebung der Platte können die Stifte in die Öffnungen abgesenkt beziehungsweise aus den Öffnungen entfernt werden. Hierdurch werden die Öffnungen verschlossen beziehungsweise geöffnet, wodurch die Produktabgabe gesteuert werden kann.

Es ist Aufgabe der Erfindung, eine eingangs genannte Vorrichtung derart auszubilden, daß sie störunanfälliger ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Vorrichtung zum Aufbringen eines Produkts auf eine Unterlage, mit einem Behälter für das Produkt, in dessen Boden sich Öffnungen zur Abgabe des Produkts befinden, welche mittels eines Schiebers verschließbar sind, dadurch gekennzeichnet, daß die Vorrichtung axial verschiebbare Stifte aufweist, welche in die Öffnungen einschiebbar sind.

Dadurch, daß in dem Behälter wenigstens ein Schieber angeordnet ist, mittels dem die Öffnungen verschließbar sind, lassen sich die Öffnungen sehr schnell und zuverlässig verschließen. Hierdurch kann der Druck in dem Behälter, das heißt der Druck, mit dem das Produkt durch die Öffnungen gedrückt wird, sehr groß sein. Durch den hohen Druck wird der Vorteil erreicht, daß in sehr kurzer Zeit eine ausreichende Menge des Produktes durch die Öffnungen fließen kann.

Somit genügt es, die Öffnungen nur für sehr kurze Zeit nicht verschlossen zu halten. Dies läßt sich durch den Schieber auf sehr einfache Weise erreichen. Denn der Schieber kann beispielsweise mittels eines Preßluftzylinders mit einem relativ kurzen Hub in seitlicher Richtung über die Öffnung geschoben werden beziehungsweise von der Öffnung weggeschoben werden.

Durch das Verschließen der Öffnungen mittels eines quer zur Öffnung betätigbaren Schiebers lassen sich die Öffnungen auch sehr dicht verschließen.

Dadurch, daß die Vorrichtung axial verschiebbare Stifte aufweist, welche in die Öffnungen einschiebbar sind, lassen sich die Öffnungen von den in ihnen sitzenden Produktteilen befreien. Hierbei ist es sehr vorteilhaft, wenn die Stifte die Öffnungen vollständig durchdringen können. Hierdurch ist sicher gewährleistet, daß die Öffnungen beim Eindringen der Stifte in sie in jedem Fall geöffnet werden. Es ist somit nicht mehr erforderlich, besondere Maßnahmen zu ergreifen, daß sichergestellt ist, daß sich in dem Produkt keine festen Teile mehr befinden. Gelangen feste Teile in die Öffnungen, können sie problemlos durch die Stifte wieder aus den Öffnungen entfernt werden. Die erfindungsgemäße Vorrichtung ist somit sehr störunanfällig und arbeitet äußerst zuverlässig. Vorzugsweise sind die Stifte im Inneren des Behälters angeordnet.

Als sehr vorteilhaft hat sich eine Ausführungsform der Erfindung herausgestellt, bei der die Stifte einen geringfügig kleineren Querschnitt als die Öffnungen haben. Hierdurch läßt sich eine sehr saubere Reinigung der Öffnungen vornehmen. Dringen die Stifte in die Öffnungen ein, kann allenfalls noch eine sehr dünne Schicht des Produktes an den Wandungen der Öffnungen haften bleiben.

Besonders vorteilhaft ist es, wenn der Boden des Behälters und der Schieber als ebene Platte ausgebildet sind. Hierdurch läßt sich auf einfache Weise eine Vielzahl von Öffnungen gleichzeitig verschließen. Darüber hinaus läßt sich eine derartige Anordnung einfach herstellen, was sich vorteilhaft auf die Herstellungskosten auswirkt.

Bei der letztgenannten Ausführungsform ist es besonders vorteilhaft, wenn die einander zugewandten Seiten des Bodens und des Schiebers plangeschliffen sind. Durch den Planschliff lassen sich die Öffnungen äußerst dicht verschließen. Darüber hinaus wird durch den Planschliff erreicht, daß der Schieber mittels einer Adhäsionskraft an dem Boden haftet. Dies bewirkt, daß zwischen Schieber und Boden kein Produkt gelangen kann. Dies wirkt sich besonders vorteilhaft auf die Zuverlässigkeit der Vorrichtung aus.

Besonders vorteilhaft ist auch eine Ausführungsform der Erfindung, bei der die Öffnungen in dem Boden in Form einer Matrix angeordnet sind und der Schieber korrespondierende Öffnungen aufweist. Hierdurch läßt sich erreichen, daß das Produkt entsprechend der Form der Matrix auf die Unterlage aufgebracht werden kann. So läßt sich erreichen, daß das Produkt beispielsweise in kreisrunder, ovaler, dreieckiger oder rechteckiger Form auf die Unterlage aufgebracht wird. Dadurch, daß der Schieber korrespondierende Öffnungen aufweist, lassen sich alle Öffnungen des Bodens gleichzeitig öffnen beziehungsweise verschließen.

Bei einer weiteren besonderen Ausführungsform der Erfindung ist vorgesehen, daß ein Antrieb vorhanden ist, mittels welchem der Schieber verschiebbar ist. Der Antrieb kann beispielsweise als Kurzhubzylinder ausgebildet sein. Hierdurch läßt sich der Schieber auf einfache Weise hin- beziehungsweise herbewegen. Der Antrieb könnte aber auch ein Schrittschaltwerk beziehungsweise ein Schrittmotor sein. Hierdurch ließe sich insbesondere ein als kreisrunder Teller ausgebildeter Schieber um seinen Mittelpunkt verschieben beziehungsweise verdrehen. Bei einer Drehung des Tellers könnte darauf verzichtet werden, die Drehrichtung des Tellers zu ändern. Statt dessen könnte der Teller schrittweise in eine Richtung verdreht werden. Hierzu wäre es jedoch erforderlich, die Öffnungen so anzuordnen, daß sie bei jedem zweiten Schritt wieder verschlossen wären.

Als besonders vorteilhaft hat sich auch eine Ausführungsform der Erfindung herausgestellt, bei der der Behälter trichterförmig ausgebildet ist. Durch die trichterförmige Ausbildung des Behälters läßt sich in vorteilhafter Weise erreichen, daß sich das Produkt im Inneren des Behälters gleichmäßig verteilt, so daß durch alle Öffnungen etwa gleich viel Produkt herausgepreßt wird. Auf besondere Elemente im Inneren des Behälters zur Verteilung des Produktes kann bei einem trichterförmigen Behälter verzichtet werden.

Sehr vorteilhaft ist eine Ausführungsform der Erfindung, bei der die Stifte in Form derselben Matrix angeordnet sind, wie die Öffnungen. Hierdurch lassen sich alle Öffnungen gleichzeitig reinigen.

Besonders vorteilhaft ist es auch, wenn die Stifte an einer Stiftplatte befestigt sind, welche in axialer Richtung der Stifte verschiebbar ist. Eine derartige Ausführungsform läßt sich einerseits sehr einfach und damit preiswert herstellen, und andererseits lassen sich die Stifte mittels einer derartigen Ausführungsform sehr einfach und zuverlässig axial verschieben.

Besonders vorteilhaft bei der letztgenannten Ausführungsform ist es, wenn die Stiftplatte Ausnehmungen aufweist, welche zweckmäßigerweise sehr groß beziehungsweise so groß wie möglich sind. Hierdurch ist gewährleistet, daß das Produkt problemlos zu den Öffnungen gelangen kann. Darüber hinaus wird durch die Ausnehmungen erreicht, daß das Produkt beim Bewegen der Stiftplatte im Behälter sehr gut durchmischt wird.

Mittels der erfindungsgemäßen Vorrichtung läßt sich insbesondere Soße in einem Arbeitsgang so auf eine Pizza aufbringen, daß sie nicht mehr durch Verstreichen verteilt werden muß. Die Soße kann ohne die Bildung von Anhäufungen in einer definierten Dicke gleichmäßig auf die Pizza verteilt werden, wobei auch ein definierter Freirand eingehalten wird.

Da mittels der erfindungsgemäßen Vorrichtung Soße sehr schnell auf die Pizza aufgebracht werden kann, läßt sie sich im Durchlaufbetrieb aufbringen. Das heißt, weder wird das Band, auf dem Pizzen transportiert werden, angehalten, noch muß die Vorrichtung zeitweise mit dem Band mitlaufen. Vorteilhaft ist auch, daß unterschiedlich dicke Pizzen problemlos mit Soße belegt werden können.

Da durch das genaue Dosieren keine Soße auf den Rand der Pizza beziehungsweise neben die Pizza aufgebracht wird, werden sehr wenig fehlerhafte Pizzen produziert. Des weiteren wird die Produktionseinrichtung nicht verunreinigt, wodurch weitere Probleme vermieden werden.

Besonders vorteilhaft bei der erfindungsgemäßen Vorrichtung ist es, daß sie mit einem relativ geringen Druck im Inneren des Behälters auskommt und dennoch eine hohe Genauigkeit bei der Dosierung hat. Des weiteren wird nahezu ausgeschlossen, daß die Dosiervorrichtung nachtropft. Schließlich lassen sich mit der erfindungsgemäßen Dosiervorrichtung Produkte hoher Viskosität bei sehr genauer Dosierung verarbeiten.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine erfindungsgemäße Vorrichtung von der Seite teilweise im Schnitt mit geöffneten Öffnungen,
- Figur 2: die in Figur 1 dargestellte Vorrichtung von unten, und
- Figur 3: eine Stiftplatte ohne Stifte von unten.

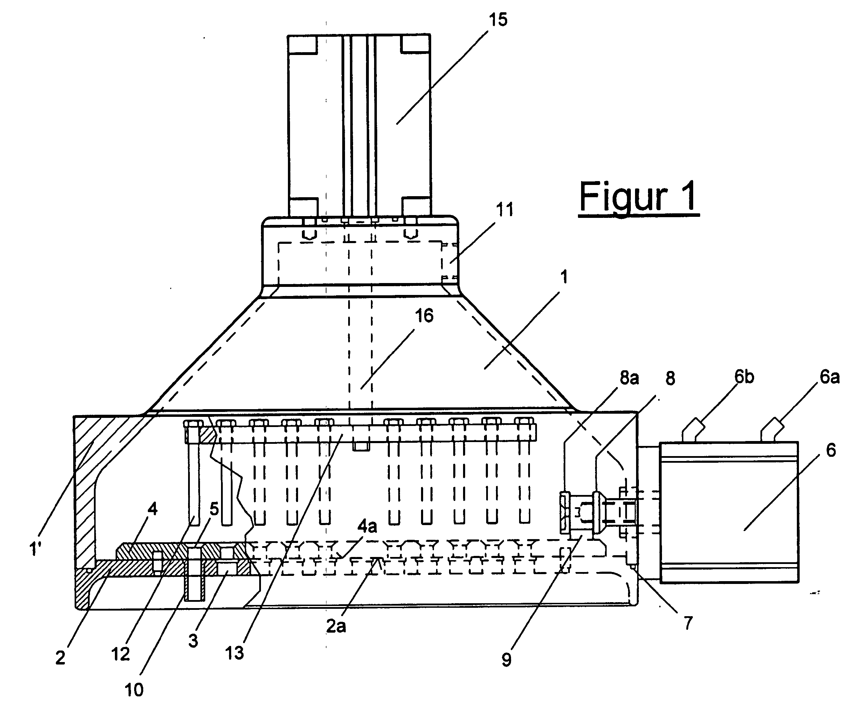

Wie Figur 1 entnommen werden kann, weist eine erfindungsgemäße Vorrichtung ein Grundelement 1 auf, welches im Inneren trichterförmig ausgebildet ist. Das Grundelement 1 weist an seinem in der Figur 1 dargestellten unteren Ende ein ringförmiges Element 1' auf. Das ringförmige Element 1' bildet einen zylinderförmigen Fortsatz des trichterförmigen Grundelements 1.

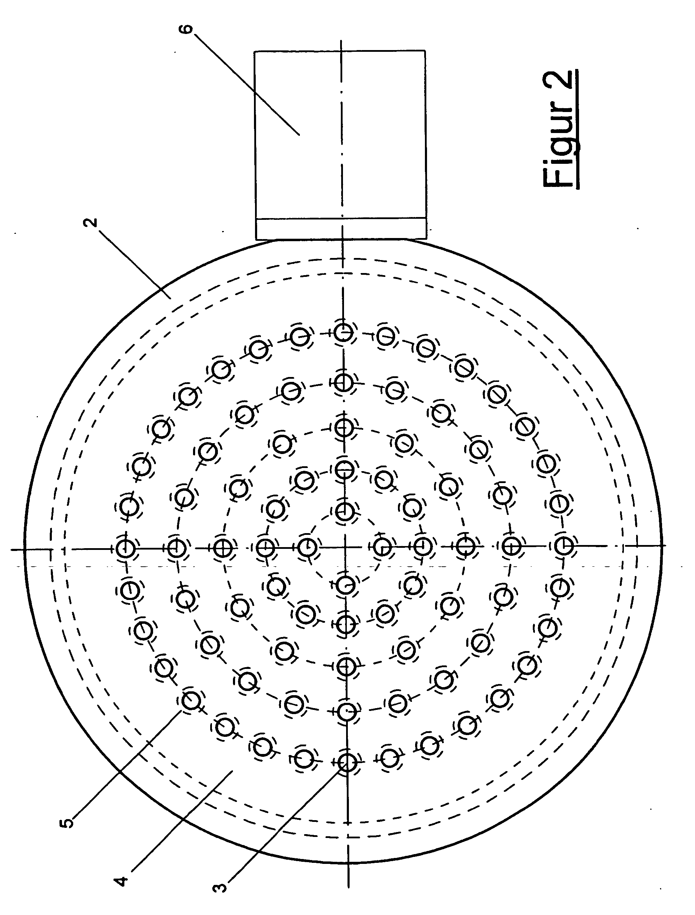

An seinem dem Grundelement 1 abgewandten Ende weist das ringförmige Element 1' eine Ringnut 7 auf, in welcher ein O-Ring eingelegt ist, zur Abdichtung einer Bodenplatte 2 gegenüber dem ringförmigen Element 1'. Zur Verbindung der Bodenplatte 2 mit dem ringförmigen Element 1' werden Spannelemente verwendet, welche in der Zeichnung aus Gründen der Übersichtlichkeit nicht dargestellt sind. Die Bodenplatte 2 weist Öffnungen 3 auf, welche in Form einer Matrix angeordnet sind. Die Anordnung der Öffnungen 3 läßt sich insbesondere Figur 2 entnehmen.

In den Öffnungen 3 der Bodenplatte 2 sind Hülsen 10 angeordnet, welche etwa vier Zentimeter lang sind. Hierdurch wird erreicht, daß der Produktausstoß gerichtet erfolgen kann, ohne hierzu eine dicke Bodenplatte verwenden zu müssen.

Im Inneren des Behälters 1, 1', 2 ist ein Schieber 4 angeordnet, welcher ebenfalls als Platte ausgebildet ist. Der Schieber 4 weist Öffnungen 5 auf, welche mit den Öffnungen 3 der Bodenplatte 2 korrespondieren. Die Öffnungen 5 sind an der der Bodenplatte 2 abgewandten Seite des Schiebers 4 angesenkt. Die dem Schieber 4 zugewandte Seite 2a der Bodenplatte 2 sowie die der Bodenplatte 2 zugewandte Seite 4a des Schiebers sind plangeschliffen.

Die äußeren Abmessungen des Schiebers 4 sind kleiner als die inneren Abmessungen des ringförmigen Elements 1'. Hierdurch läßt sich der Schieber 4 auf der Bodenplatte 2 seitlich verschieben.

Zur Verschiebung des Schiebers 4 ist an einer Seite des Schiebers 4 ein gabelförmiges Element 9 befestigt, in welches ein Kolben 8 eines Luftzylinders 6 eingreift. Der Kolben 8 weist hierzu eine Ausnehmung auf, so daß hinter dem gabelförmigen Element 9 eine Hintergreifung 8a ausgebildet ist. Bei Betätigung des Luftzylinders 6 wird der Schieber 4 somit mittels des Kolbens 8 auf der Bodenplatte 2 verschoben.

Zur Betätigung des Luftzylinders 6 sind Anschlüsse 6a, 6b vorgesehen. Wird beispielsweise der Anschluß 6a mit Luft beaufschlagt, befindet sich der Kolben 8 in der in Figur 1 dargestellten Stellung. Hierdurch sind die Öffnungen 5 des Schiebers 4 und die Öffnungen 3 der Bodenplatte 2 übereinander angeordnet. Wird hingegen der Anschluß 6b des Zylinders 6 mit Luft beaufschlagt, fährt der Kolben 8 in den Zylinder 6 hinein, wodurch sich der Schieber 4 nach rechts verschiebt, so daß sich die Öffnungen 5 des Schiebers 4 nicht mehr oberhalb der Öffnungen 3 der Bodenplatte 2 befinden und die Öffnungen 3 der Bodenplatte 2 dicht verschlossen sind.

Zur Zuführung des Produkts in den Behälter 1, 1' weist das trichterförmige Grundelement 1 eine Öffnung 11 auf. An die Öffnung 11 wird eine in der Figur nicht dargestellte Produkt-Zuführleitung angeschlossen, mittels welcher ständig Produkt unter geringem Druck in den Behälter 1, 1' gepumpt wird.

Im Inneren des Behälters 1, 1' ist eine Stiftplatte 13 angeordnet, an welcher Stifte 12 befestigt sind. Die Stifte 12 sind in Gewindebohrungen 12a der Stiftplatte 13 eingeschraubt. Der Durchmesser der Stifte 12 ist geringfügig kleiner als der in den Durchmesser der Hülsen 10.

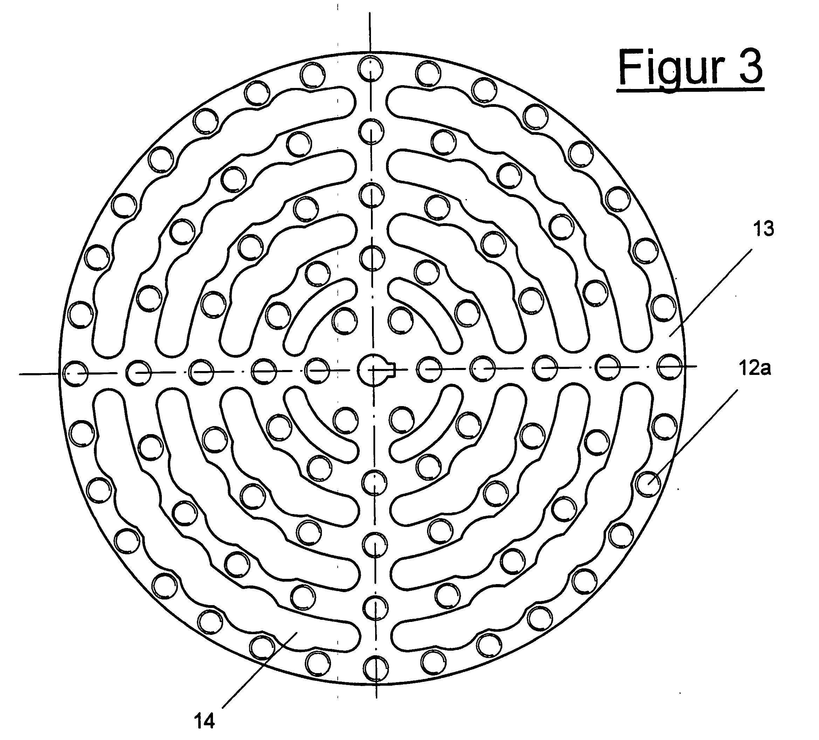

Die Anordnung der Gewindebohrungen 12a und damit der Stifte 12 entspricht der Anordnung der Öffnungen 3 der Bodenplatte 2 beziehungsweise der Öffnungen 5 des Schiebers 4. Die Stiftplatte 13 weist des weiteren Ausnehmungen 14 auf, welche so groß wie möglich ausgebildet sind. Die Größe der Ausnehmungen 14 ist so gewählt, daß die Stiftplatte 13 noch eine genügend große Stabilität besitzt. Die Anordnung der Gewindebohrungen 12a sowie der Ausnehmungen 14 lassen sich insbesondere Figur 3 entnehmen.

Die Stiftplatte 13 ist an einer Kolbenstange 16 eines Druckluftzylinders 15, welcher oberhalb des trichterförmigen Grundelements 1 angeordnet ist, befestigt. Die Befestigung der Stiftplatte 13 an der Kolbenstange 16 des Druckluftzylinders 15 ist verdrehsicher ausgebildet, wobei die Kolbenstange 16 ebenfalls verdrehsicher im Druckluftzylinder 15 angeordnet ist.

Die Stiftplatte 13 ist so im Behälter 1, 1' angeordnet, daß sich die Stifte 12 oberhalb der Öffnungen 3 der Bodenplatte 2 befinden. Wird der Druckluftzylinder 15 mit Druckluft beaufschlagt, senkt sich die Stiftplatte 13 soweit, daß die Stifte 12 soweit in die Öffnungen der Bodenplatte 2 eindringen, daß sie die in den Öffnungen 3 angeordnete Hülsen 10 vollständig durchdringen. Hierdurch werden sich gegebenenfalls in den Hülsen 10 befindliche Produktbestandteile aus den Hülsen 10 herausgestoßen.

Durch den erfindungsgemäßen Aufbau der Vorrichtung lassen sich die Bodenplatte 2 sowie der Schieber 4 auf einfache Weise austauschen. Hierdurch kann die Vorrichtung problemlos auf ein anderes Dosierbild eingestellt werden.

Da die Vorrichtung nur sehr wenig bewegte Teile hat, zeichnet sie sich durch eine hohe Zuverlässigkeit aus. Dies wirkt sich sehr vorteilhaft auf die Instandhaltungskosten aus. Des-weiteren läßt sich die erfindungsgemäße Vorrichtung durch die Abnehmbarkeit der Bodenplatte 2 sowie des Schiebers 4 auf leichte Weise reinigen. Schließlich sind die Herstellungskosten wegen des einfachen Aufbaus der erfindungsgemäßen Vorrichtung sehr gering.

## Patentansprüche

1. Vorrichtung zum wiederholten Aufbringen eines Produkts auf eine Unterlage, mit einem Behälter (1, 1', 2) für das Produkt, in dessen Boden (2) sich Öffnungen (3) zur Abgabe des Produkts befinden, welche zum Druckaufban im Behälter (1, 1', 2) mittels eines Schiebers (4) verschließbar sind,
**dadurch gekennzeichnet,**
**daß** die Vorrichtung axial verschiebbare Stifte (12) aufweist, welche während der Offenstellung des Schiebers (4) in die Öffnungen (3) einschiebbar sind.

2. Vorrichtung nach Anspruch 1,
**dadurch gekennzeichnet,**
**daß** die Stifte (12) die Öffnungen (3) vollständig durchdringen.

3. Vorrichtung nach Anspruch 1 oder 2,
**dadurch gekennzeichnet**,
die Stifte (12) einen geringfügig kleineren Querschnitt als die Öffnungen (3) haben.

4. Vorrichtung nach einem der Ansprüche 1 bis 3,
**dadurch gekennzeichnet**,
der Boden (2) des Behälters (1, 1', 2) und der Schieber (4) als ebene Platte ausgebildet sind, wobei die einander zugewandten Seiten (2a, 4a) des Bodens (2) und des Schiebers (4) plangeschliffen sind.

5. Vorrichtung nach einem der Ansprüche 1 bis 4,
**dadurch gekennzeichnet,**
**daß** die Öffnungen (3) in dem Boden (2) in Form einer Matrix angeordnet sind und der Schieber (4) korrespondierende Öffnungen (5) aufweist.

6. Vorrichtung nach einem der Ansprüche 1 bis 5,
**dadurch gekennzeichnet,**
**daß** der Behälter (1, 1', 2) zumindest teilweise trichterförmig ausgebildet ist.

7. Vorrichtung nach Anspruch 5 oder 6,
**dadurch gekennzeichnet,**
**daß** die Stifte (13) in Form derselben Matrix angeordnet sind, wie die Öffnungen (3) des Bodens (2).

8. Vorrichtung nach einem der Ansprüche 1 bis 7,
**dadurch gekennzeichnet,**
**daß** die Stifte (12) an einer Stiftplatte (13) befestigt sind, welche in axiale Richtung der Stifte (12) verschiebbar ist.

9. Vorrichtung nach Anspruch 8,
**dadurch gekennzeichnet,**
**daß** die Stiftplatte (13) Ausnehmungen (14) aufweist.

## Claims

1. Apparatus for repeated application of a product onto a substrate, having a container (1, 1', 2) for the product, in the base (2) of which container openings (3) are situated for dispensing the product, said openings being closable by means of a slider (4) for pressure buildup in the container (1, 1', 2), **characterised in that** the apparatus has axially displaceable pins (12) which may be pushed into the openings (3) while the slider (4) is in the open position.

2. Apparatus according to claim 1, **characterised in that** the pins (12) penetrate completely through the openings (3).

3. Apparatus according to claim 1 or 2, **characterised in that** the pins (12) have a slightly smaller cross-section than the openings (3).

4. Apparatus according to one of the claims 1 to 3, **characterised in that** the base (2) of the container (1, 1', 2) and the slider (4) are designed as planar plates, whereby the sides (2a, 4a) facing towards each other of the base (2) and of the slider (4) are face ground.

5. Apparatus according to one of the claims 1 to 4, **characterised in that** the openings (3) in the base (2) are arranged in the form of a matrix and the slider (4) has corresponding openings (5).

6. Apparatus according to one of the claims 1 to 5, **characterised in that** the container (1, 1', 2) is designed at least partially funnel-shaped.

7. Apparatus according to claim 5 or 6, **characterised in that** the pins (12) are arranged in the form of the same matrix as the openings (3) in the base (2).

8. Apparatus according to one of the claims 1 to 7, **characterised in that** the pins (12) are attached to a pin plate (13) which is displaceable in the axial direction of the pins (12).

9. Apparatus according to claim 8, **characterised in that** the pin plate (13) has cut-outs (14).

## Revendications

1. Dispositif d'application répétée d'un produit sur un support, doté d'un récipient (1, 1', 2) pour le produit, dans la partie inférieure (2) duquel se situent des orifices (3) destinés à délivrer le produit, lesquels, pour établir une pression dans le récipient (1, 1', 2), peuvent être obturés au moyen d'un coulisseau (4),
**caractérisé en ce que**
le dispositif comprend des goupilles (12) mobiles dans le sens axial, lesquelles, pendant que le coulisseau (4) est en position ouverte, peuvent être introduites dans les orifices (3).

2. Dispositif selon la revendication 1,
**caractérisé en ce que**
les goupilles (12) pénètrent entièrement à travers les orifices (3).

3. Dispositif selon la revendication 1 ou 2,
**caractérisé en ce que**
les goupilles (12) présentent une section transversale légèrement inférieure à celle des orifices (3).

4. Dispositif selon l'une quelconque des revendications 1 à 3,
**caractérisé en ce que**
la partie inférieure (2) du récipient (1, 1', 2) et le coulisseau (4) sont conçus comme une plaque plane, les côtés (2a, 4a) de la partie inférieure (2) et du coulisseau (4), tournés les uns vers les autres, ayant subi une rectification plane.

5. Dispositif selon l'une quelconque des revendications 1 à 4,
**caractérisé en ce que**
les orifices (3) dans la partie inférieure (2) sont disposés sous forme d'une matrice et le coulisseau (4) comprend des orifices (5) correspondants.

6. Dispositif selon l'une quelconque des revendications 1 à 5,
**caractérisé en ce que**
le récipient (1, 1', 2) est conçu au moins en partie en forme d'entonnoir.

7. Dispositif selon la revendication 5 ou 6,
**caractérisé en ce que**
les goupilles (13) sont disposées sous forme de la même matrice que celle des orifices (3) de la partie inférieure (2).

8. Dispositif selon l'une quelconque des revendications 1 à 7,
**caractérisé en ce que**
les goupilles (12) sont fixées à une plaque porte-goupilles (13), laquelle est mobile dans la direction axiale des goupilles (12).

9. Dispositif selon la revendication 8,
**caractérisé en ce que**
la plaque porte-goupilles (13) comprend des évidements (14).
